# EUROPEAN PATENT SPECIFICATION

(11) **EP 2 920 457 B1**
(45) Date of publication and mention of the grant of the patent: **11.01.2017**
(21) Application number: 13791806.6
(22) Date of filing: 14.11.2013
(51) Int. Cl.: F03D 1/06

(54) **A METHOD OF MANUFACTURING A BLADE ELEMENT**
VERFAHREN ZUR HERSTELLUNG EINES ROTORBLATTELEMENTES
PROCÉDÉ DE FABRICATION D'UN ÉLÉMENT DE PALE D'UNE ÉOLIENNE

(30) Priority: 14.11.2012 EP 12192587
(43) Date of publication of application: 23.09.2015
(73) Proprietor: XEMC Darwind B.V., 1217 JC Hilversum (NL)
(72) Inventor: ZWART, Guido Gerardus Maria, NL-7475 PD Markelo (NL)
(74) Representative: Altenburg, Bernardus Stephanus Franciscus
(86) International application number: PCT/EP2013/073830
(87) International publication number: WO 2014/076183

(56) References cited:
- EP-A2- 1 798 412
- WO-A1-2006/070171
- WO-A1-2010/149806
- FR-A1- 2 863 321
- US-A1- 2010 084 079

## Description

The present invention relates to a method of manufacturing a blade element comprising at least half a blade root, said method comprising anchoring inserts in said at least half a blade root.

Rotor blades for wind turbines are usually made by joining two rotor blade halves or as a single rotor blade. A rotor blade has a blade root with which it is connected to the hub of a wind turbine. More specifically it is connected to the pitch bearing, said pitch bearing allowing the rotor blade to be rotated about its longitudinal axis. To connect the rotor blades the blade roots are provided with inserts. This may be done by drilling holes in the longitudinal direction in the root face. To correctly position the location of the holes, use is made of a template, which is a ring with holes through which the drilling is performed. To fix the inserts, wider holes are drilled in a transverse direction at the blind ends of the drilled holes. The inserts are fastened using T-bolts inserted into the wider holes. The inserts themselves may comprise an inner thread that is exposed at the root face or may comprise a threaded section protruding from the root face. The stiffener member is attached to the blade element prior to mounting the blade element to the hub of a wind turbine, facilitating the mounting thereof as the blade root does not deform.

There is an ever present need to drive down the cost of wind turbines in any aspect thereof.

The object of the present invention is to provide a method according to the preamble that allows a reduction in cost.

To this end, a method according to the preamble is characterized in that a stiffener member for a pitch bearing, said stiffener member comprising holes, is used to determine the location of the inserts and is fixed to the blade element, wherein the method comprises the steps of
- fixing the stiffener member to the blade element before using the stiffener member comprising holes as a template to drill holes into a polymer matrix at the root face of the blade element, using the holes of the stiffener member as guides for drilling,
- drilling transverse secondary holes,
- providing the drilled holes with inserts, an insert comprising a T-bolt and a shank, and
- the inserts are fixed to the blade element using said T-bolts.

During use, the pitch bearing is subjected to deformation forces causing amongst other ovalisation. Such deformations are detrimental to the longevity of the pitch bearing. To alleviate the problem, a stiffener ring is used between the blade root and the hub. The stiffener member serves a dual purpose: During use it serves as a stiffener member. During the manufacture it serves as a positioning element for the inserts, as it helps to define (control) the location of the inserts. Thus, cost is reduced. Also, disassembly and re-use of components is possible, saving cost. The blade element may be a turbine blade half, or a full turbine blade. It may also be a turbine blade section or half-product used for the manufacture of a turbine blade. The stiffener member is, for example fixed using screws with their heads sunk in the stiffener member and/or glued to the blade root. The stiffener member will in general have an annular shape, such as a circular or elliptical shape, or is a section thereof. In the latter case, it will extend over 180° for most practical purposes. It is for example a cast stiffener member, and for example made of steel. The blade element provided with the stiffener member will be attached to a hub of a wind turbine. Fixing the stiffener member to the blade element may be done before drilling the holes in the face of the at least half blade root. The T-bolt is an insert base. It allows for holding a wind turbine blade by the hub very well. The shank is for example a waisted shank. The diameter of the thread at one end of the shank is not necessarily the same at the other end, but for the sake of convenience will be the same in practice.

EP1798412 discloses a method of manufacturing a wind turbine rotor blade comprising a flange section fabricated from a fibre reinforced matrix. The flange section comprising holes is configured to connect the rotor blade to a rotor hub. The method involves drilling holes at a root face of the blade element, drilling transverse secondary holes and providing the holes with a shank and a T-bolt.

WO2010/149806 discloses a method of stiffening a blade root by using an insert-flat assembly for joining the blade to a wind turbine. In the method, a flat is connected to inserts to form the insert-flat assembly. Then, the insert-flat assembly is fixed to the root of the blade. The fixation of the insert-flat assembly to the root is done by either machining holes in said root that matches the inserts of the insert-flat assembly or by placing a composite material among the inserts to form a insert-flat-composite material assembly on which the blade is laminated.

According to a favourable embodiment, the transverse secondary holes are drilled using an auxiliary tool engaging
- at least one of i) the hole drilled in the root face, and ii) the hole of the stiffener member; and
- the side of the stiffener member.

Thus the position of the transverse secondary hole can be accurately and quickly determined. The auxiliary tool will comprise a notch at an edge of the auxiliary tool or a guide hole to facilitate drilling to serve as a guide for the drill. It contributes to achieving e.g. a radially extending secondary hole, minimizing its adverse effects that weaken the blade root by the holes. The auxiliary tool may engage at least one of i) the holes drilled in the root face, and ii) the hole of the stiffener member.

According to a favourable embodiment, the stiffener member comprises at least part of a bulkhead.

A bulkhead is used to prevent people from falling into a rotor blade. By making it an integral part of the stiffener member cost may be saved. The bulkhead or part thereof may be cast together with the stiffener member. The bulkhead may also be used to join the stiffener members of blade halves each comprising a stiffener member. For example, each stiffener member will comprise half a bulkhead, and the bulk heads are joined. To this end, the bulkhead halves may comprise a flange, and the flanges of the bulkhead flanges are bolted together.

According to a favourable embodiment, a web extending between turbine blade halves is attached to the bulkhead.

A web is a support for reinforcing the turbine blade. An example of a web is a shear web for taking up shear forces. This allows forces to be passed on from the turbine blade to the hub while avoiding stress concentrations. The webs will comprise a flange that will be bolted, glued etc. to the bulkhead. The bulkhead may contain one or two access holes (e.g. manholes) to fix the flange to the bulkhead. Alternatively, angled profile may be used and bolted to each of the bulkhead and the web.

According to a favourable embodiment, a turbine blade is manufactured by joining turbine blade halves each comprising a stiffener member wherein the stiffener members are joined.

Thus an embodiment is provided suitable for the manufacture of a turbine blade using turbine blade halves. To join the turbine blade halves, the turbine blade halves may have flanges at each end, and the flanges are bolted together so as to form a stiffener ring.

According to a favourable embodiment, the stiffener member is a 360° ring provided over at least 180° with inserts.

If the stiffener member is provided over 360° with inserts, it is suitable for use in the so-called "one-shot" technique where a turbine blade is made in one go. If provided with inserts over 180°, the other 180° will be provided with holes for drilling holes into a turbine blade half to be joined with a complementary turbine blade half in which the inserts of the stiffener member were embedded by polymerization.

The present invention will now be illustrated with reference to the drawing where
Fig. 1 shows a cut-out view of a part of a wind turbine rotor blade;
Fig. 2a-d show a prior art method of manufacturing a blade element;
Fig. 3a-d show an embodiment of the method according to the invention; and
Fig. 4 shows a cut-out view of a part of a wind turbine rotor blade having a shear web attached to a bulkhead.

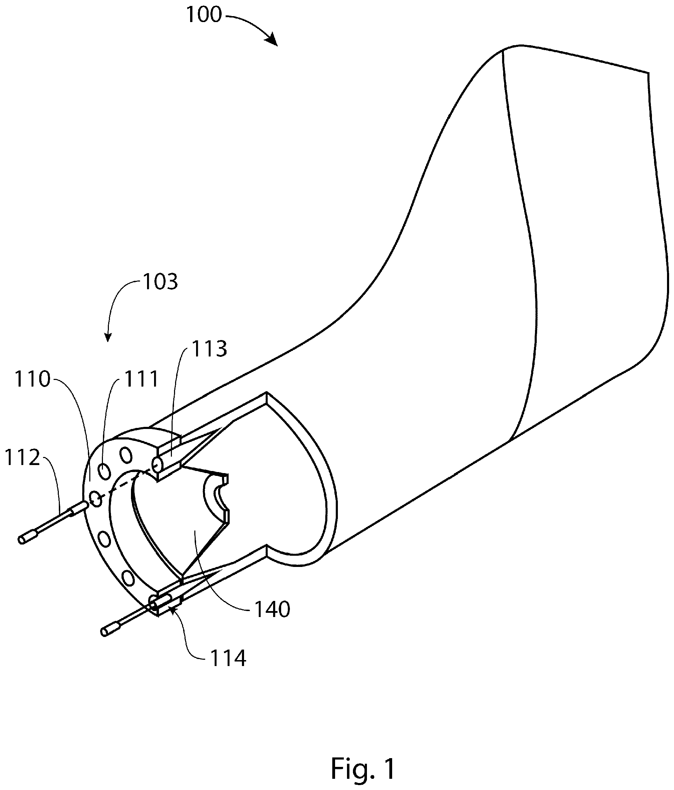

Fig. 1 shows a schematic cut-out view of part of a rotor blade 100 of a wind turbine. The rotor blade 100 comprises a blade root 103 provided with a stiffener ring 110. The stiffener ring 110 comprises holes 111 through which shanks 112, in this embodiment waisted shanks 112, are anchored to insert bases 113. In this embodiment, the waisted shanks 112 and the insert bases 113 together form inserts 114. Fig. 1 is schematic. For example, in reality the number of holes 111 for inserts 114 may well be over one hundred.

A bulkhead 140 is shown, which bulkhead 140 is advantageously an integral part of the stiffener ring 110. It can be cast together with the stiffener ring 110, increasing the stiffness of the stiffener ring 110. In the embodiment shown, the bulkhead 140 is conical.

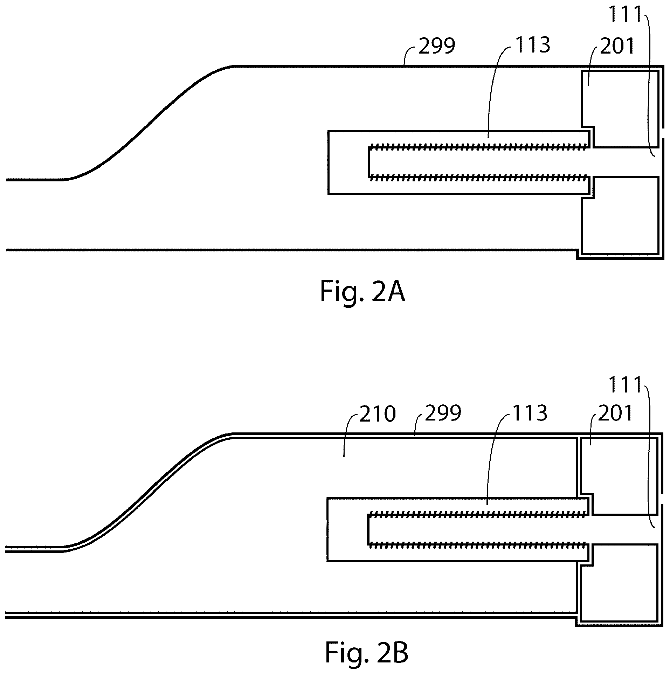

Fig. 2a-d are cross-sectional views of a detail of a rotor blade halve 200 along its longitudinal direction during the manufacture thereof.

Fig. 2a shows the stiffener ring halve 201 that is provided in a circumferential direction with insert bases 113 made of steel (e.g. held into recesses of the stiffener ring half 210.

The stiffener ring halve 201 is placed inside a mold 299 and liquid resin is injected into the mold 299 (Fig. 2b) and subsequently cured in an otherwise conventional manner to form a polymer matrix 210. The resin is for example epoxy-based or polyester-based resin.

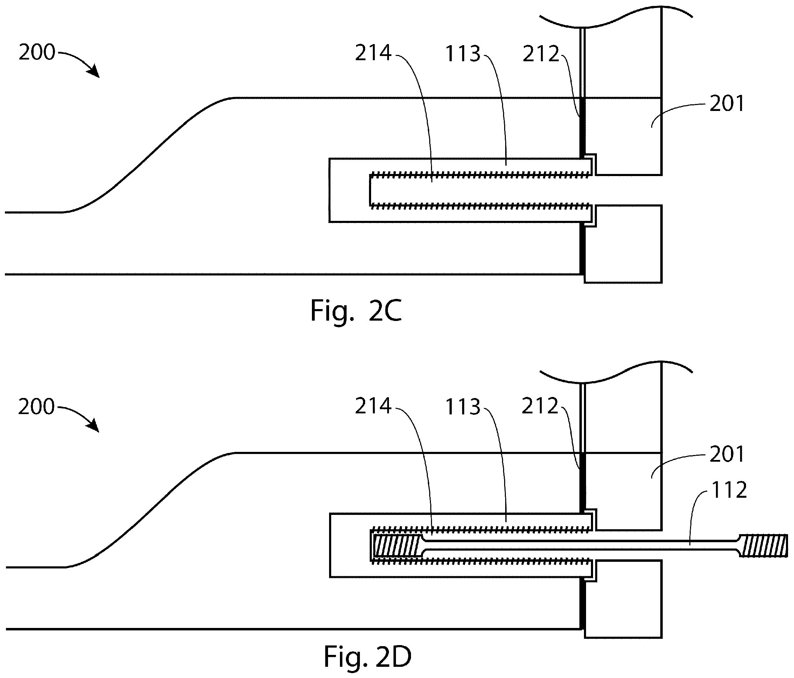

Once the mold 299 is open, the stiffener ring halve 201 is fixed to the blade root using screws (not shown) or glue 212 (Fig. 2c).

Fig. 2d shows a waisted shank 112 being screwed into the insert base 113, which has a blind hole 214 with inner thread.

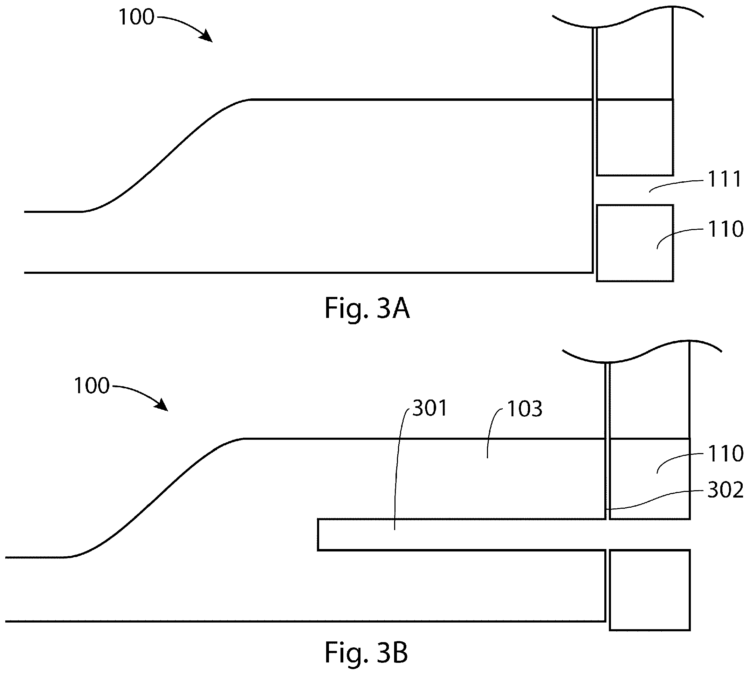

Fig. 3a-d are cross-sectional views of a detail of a rotor blade 100 of a wind turbine along its longitudinal direction. The rotor blade 100 is provided with a stiffener ring 110 (Fig. 3a).

Holes 111 in the stiffener ring 110 are used as guides for drilling drilled holes 301 in the blade root 103 (Fig. 3b). If the blade root 103 is deformed, it may be necessary to make it circular using jacks, as is known in the art. It is convenient to attach the stiffener ring 110 to the face 302 of the blade root 103 at this point (before drilling drilled holes 301).

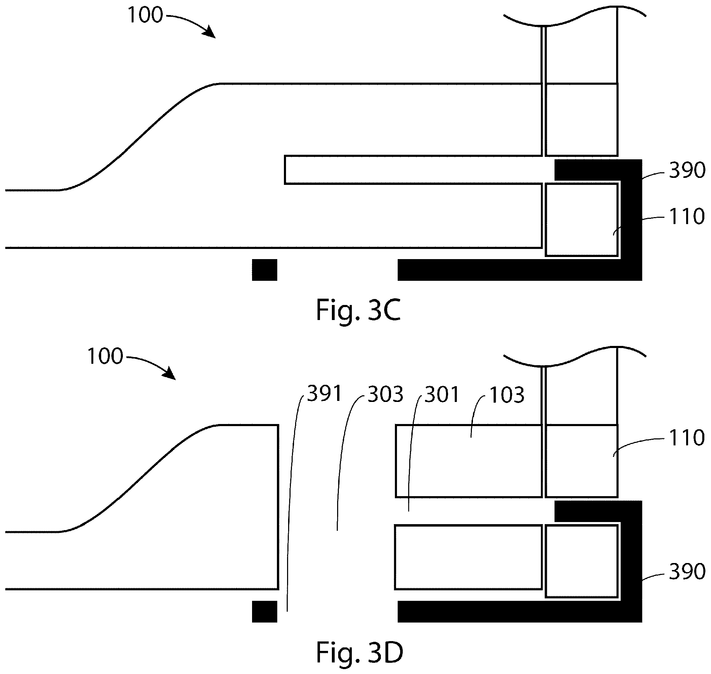

A transverse hole is drilled using an auxiliary tool 390 (Fig. 3c) that serves as a guide for a drill (not shown), the auxiliary tool 390 being engaged by at least one of the hole 111 in the stiffener ring 110 and the drilled hole 301. In addition, the auxiliary tool 390 engages the side of the stiffener ring 110 such that the auxiliary tool 390 can not rotate and only slide in the longitudinal direction of the rotor blade 100. The stiffener ring 110 acts as a stop for that movement towards the tip of the rotor blade 100. This accurately defines the location of the guide hole 391 in the auxiliary tool 390. The guide hole 391 is transverse to the drilled hole 301.

A transverse secondary hole 303 is drilled into the blade root 103 (Fig. 3d) using the guide hole 391 of the auxiliary tool 390 as a guide.

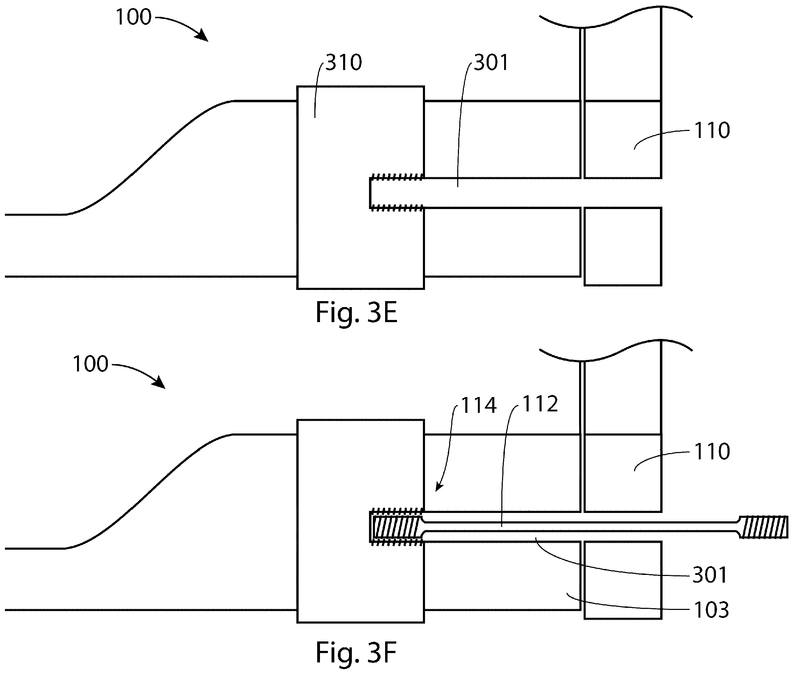

A T-bolt 310 is inserted into the secondary hole 303 (Fig. 3e), and a waisted shank 112 is screwed into the T-bolt. The T-bolt 310 and the shank 112 together form an insert 114 (Fig. 3f).

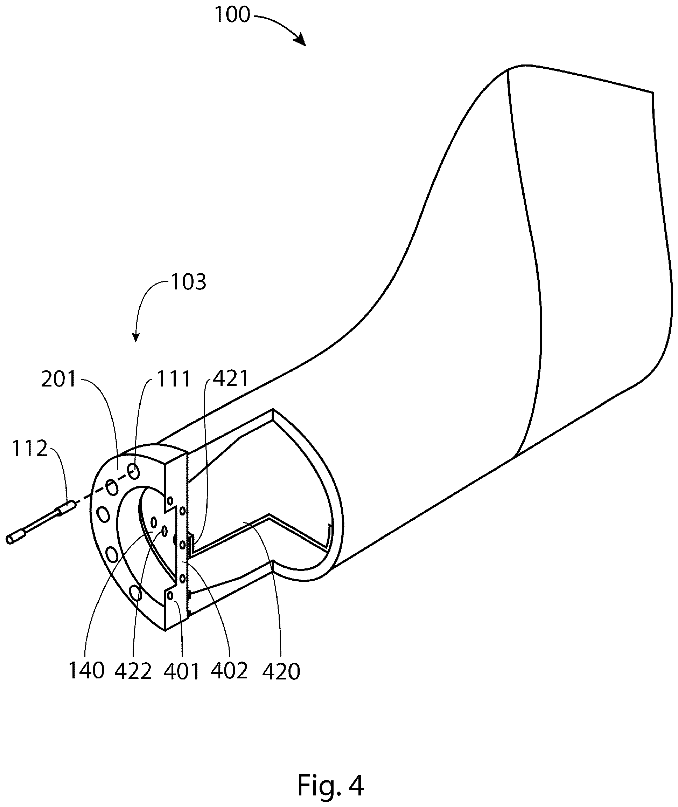

Fig. 4 is a cut-away view that substantially corresponds to Fig. 1, except that the stiffener ring 110 is comprised of ring halves 201, one of which is shown. The stiffener ring halve 201 comprises two ring flanges 401 that are used to bolt bolt stiffener ring halves 201 together. The bulkhead 140 comprises two bulkhead sections, one on each ring halve 201. Each bulkhead section has a bulkhead flange 402 and the bulkhead flanges 402 are bolted, glued or welded together to increase the stiffness of the stiffener ring 110.

Fig. 4 also shows a shear web 420 that connects opposite rotor blade halves 200. The shear web 420 is attached to the bulkhead 140 via a shear web flange 421. It is for example bolted (with bolts 422), glued or both.

## Claims

1. A method of manufacturing a blade element (100) comprising at least half a blade root (103), said method comprising anchoring inserts (114) in said at least half a blade root (103), **characterized in that** a stiffener member (110) for a pitch bearing, said stiffener member (110) comprising holes (111), is used to determine the location of the inserts (114) and is fixed to the blade element (100), wherein the method comprises the steps of
- fixing the stiffener member (110) to the blade element (100) before using the stiffener member (110) comprising holes (111) as a template to drill holes (301) into a polymer matrix (210) at the root face (302) of the blade element (100), using the holes (111) of the stiffener member (110) as guides for drilling,
- drilling transverse secondary holes (303),
- providing the drilled holes with inserts (114), an insert (114) comprising a T-bolt (310) and a shank (112), and
- the inserts (114) are fixed to the blade element (100) using said T-bolts (310).

2. The method according to claim 1, wherein the transverse secondary holes (303) are drilled using an auxiliary tool (390) engaging
- at least one of i) the hole (301) drilled in the root face (302), and ii) the hole (111) of the stiffener member (110); and
- the side of the stiffener member (110).

3. The method according to claim 1 or 2, wherein the stiffener member (110) comprises at least part of a bulkhead (140).

4. The method according to claim 3, wherein a web (420) extending between turbine blade halves (200) is attached to the bulkhead (140).

5. The method according to any of the preceding claims, wherein a turbine blade (100) is manufactured by joining turbine blade halves (200) each comprising a stiffener member (201) wherein the stiffener members (201) are joined.

6. The method according to any of the claims 1 to 4, wherein the stiffener member (110) is a 360° ring provided over at least 180° with inserts (114).

## Patentansprüche

1. Verfahren zur Herstellung eines Rotorblattelementes (100), umfassend wenigstens einen halben Schaufelfuß (103), wobei das Verfahren das Verankern von Einsätzen (114) in dem besagten halben Schaufelfuß (103) umfasst,
**dadurch gekennzeichnet,**
**dass** ein Versteifungselement (110) für ein Blattlager dafür verwendet wird, um die Platzierung der Einsätze (114) zu bestimmen, wobei das Versteifungsglied (110) Löcher (111) aufweist und an dem Rotorblattelement (100) festgelegt ist, wobei das Verfahren folgende Schritte umfasst
- Befestigen des Versteifungsglieds (110) an dem Rotorblattelement (100) bevor das Versteifungsglied (110) welches Löcher (111) aufweist, als Vorlage verwendet wird, um Löcher (301) in eine Polymermatrix (210) an der Fußseite (302) des Rotorblattelementes (100) zu bohren, wobei die Löcher (111) in dem Versteifungselement (110) als Führungen für den Bohrvorgang dienen,
- Bohren von querverlaufenden zusätzlichen Löchern (303),
- Versehen der gebohrten Löcher mit Einsätzen (114), wobei ein Einsatz (114) eine Hammerkopfschraube (310) und einen Zapfen (112) umfasst, und
- Befestigen der Einsätze (114) an dem Rotorblattelement (100) unter Benutzung der genannten Hammerkopfschrauben (310).

2. Verfahren nach Anspruch 1, wobei die quer verlaufenden zusätzlichen Löcher (303) gebohrt werden unter Verwendung eines Zusatzwerkzeugs (390) im Eingriff mit
- wenigstens einem von i) dem Loch (301), welches in die Fußseite (302) gebohrt wurde und ii) dem Loch (111) in dem Versteifungsglied (110); und
- der Seite des Versteifungsglieds (110).

3. Verfahren nach Anspruch 1 oder 2, wobei das Versteifungsglied (110) wenigstens einen Teil einer Stützwand (140) umfasst.

4. Verfahren nach Anspruch 3, wobei ein Steg (420), der sich zwischen den Hälften (200) des Rotorblattes erstreckt, an der Stützwand (140) festgelegt ist.

5. Verfahren nach einem der vorhergehenden Ansprüche, wobei ein Rotorblatt (100) hergestellt wird durch verbinden von Hälften (200) des Rotorblattes, wobei jede Hälfte ein Versteifungsglied (201) umfasst und wobei diese Versteifungsglieder (201) miteinander verbunden werden.

6. Verfahren nach einem der Anspruche 1 bis 4, wobei das Versteifungsglied (110) ein 360° umfassender Ring ist, der über wenigstens 180° mit Einsätzen (114) versehen ist.

## Revendications

1. Procédé de fabrication d'un élément de pale (100) comprenant au moins un demi-pied de pale (103), ledit procédé comprenant des inserts d'ancrage (114) dans ledit au moins un demi-pied de pale (103), **caractérisé en ce qu'**un élément raidisseur (110) pour une articulation de pas, ledit élément raidisseur (110) comprenant des trous (111), est utilisé pour déterminer l'emplacement des inserts (114) et est fixé sur l'élément de pale (100), dans lequel le procédé comprend les étapes consistant à
fixer l'élément raidisseur (110) sur l'élément de pale (100) avant d'utiliser l'élément raidisseur (110) comprenant des trous (111) comme un gabarit pour percer des trous (301) dans une matrice de polymère (210) au niveau de la face de pied (302) de l'élément de pale (100), en utilisant les trous (111) de l'élément raidisseur (110) comme guides pour le perçage,
percer des trous secondaires transversaux (303),
pourvoir les trous percés d'inserts (114), un insert (114) comprenant une vis en T (310) et une tige (112), et
les inserts (114) sont fixés sur l'élément de pale (100) en utilisant lesdites vis en T (310).

2. Procédé selon la revendication 1, dans lequel les trous secondaires transversaux (303) sont percés en utilisant un outil auxiliaire (390) venant en prise avec
au moins un i) du trou (301) percé dans la face de pied (302), et ii) du trou (111) de l'élément raidisseur (110) ; et
le côté de l'élément raidisseur (110).

3. Procédé selon la revendication 1 ou 2, dans lequel l'élément raidisseur (110) comprend au moins une partie d'une cloison (140).

4. Procédé selon la revendication 3, dans lequel un voile (420) s'étendant entre des demi-pales de turbine (200) est fixé sur la cloison (140).

5. Procédé selon l'une quelconque des revendications précédentes, dans lequel une pale de turbine (100) est fabriquée en joignant des demi-pales de turbine (200) comprenant chacune un élément raidisseur (201) dans lequel les éléments raidisseurs (201) sont joints.

6. Procédé selon l'une quelconque des revendications 1 à 4, dans lequel l'élément raidisseur (110) est une bague à 360° pourvue sur au moins 180° d'inserts (114).
